## Europäisches Patentamt
## European Patent Office
## Office européen des brevets

(11) Veröffentlichungsnummer: **0 303 845 B1**

(12) **EUROPÄISCHE PATENTSCHRIFT**

(45) Veröffentlichungstag der Patentschrift: **22.04.92**

(51) Int. Cl.5: **F16H 53/02**, F01L 1/04

(21) Anmeldenummer: **88111689.1**

(22) Anmeldetag: **20.07.88**

(54) **Hohlwelle sowie Verfahren zu ihrer Herstellung.**

(30) Priorität: **13.08.87 DE 3727057**

(43) Veröffentlichungstag der Anmeldung:
**22.02.89 Patentblatt 89/08**

(45) Bekanntmachung des Hinweises auf die
Patenterteilung:
**22.04.92 Patentblatt 92/17**

(84) Benannte Vertragsstaaten:
**AT BE CH DE ES FR GB IT LI NL SE**

(56) Entgegenhaltungen:
DE-A- 3 401 057
DE-C- 3 720 597
GB-A- 1 115 093

PATENT ABSTRACTS OF JAPAN, Band 10,
Nr. 375 (M-545)[2432], 13. Dezember 1986; &
JP-A-61 168 430 (SUMITOMO CEMENT CO.
LTD) 30-07-1986

(73) Patentinhaber: **GESENKSCHMIEDE SCHNEI-
DER GMBH**
**Ulmer Strasse 112**
**W-7080 Aalen(DE)**

(72) Erfinder: **Ebbinghaus, Alfred, Dipl.-Ing.**
**Schellingstrasse 78**
**W-7080 Aalen(DE)**

(74) Vertreter: **Neidl-Stippler, Cornelia, Dr.**
**Rauchstrasse 2**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Hohlwelle aus einem Rohr und aus drehmomentübertragenden Konstruktionselementen, wie Zahnrädern, Kurven, Nokken,od. dgl. mit einer Öffnung zum Aufsetzen auf das Rohr und Stützkörpern, wobei die Verbindung zwischen Rohr, Konstruktionselement und Stützkörper durch Verkleinerung des Raums zwischen Rohr und Konstruktionselement hergestellt ist, wobei Konstruktionselement und Rohr kraft- und/oder formschlüssig miteinander verbunden sind und in der Öffnung des Konstruktionselementes ferner mindestens ein Stützkörper angeordnet ist und das Rohr teilweise am Stützkörper anliegt, sowie ein Verfahren zu ihrer Herstellung.

Derartige mehrstückige Hohlwellen, die auch als gebaute Hohlwellen bezeichnet werden und im Wege des Fügens aus mehreren Teilen hergestellt sind, sind bereits aus dem DE-C-3720 597 bekannt.

Diese Hohlwellen sind preiswert herzustellen, vermögen sehr unterschiedliche Materialien für Innenrohr und Nocken einzusetzen und zeichnen sich durch ein niedriges Gewicht aus.

Diese bekannte Hohlwelle zeigte bei der Verwendung von spröden Materialien als Stützkörpermaterialien Probleme, die insbesondere dann auftreten, wenn z.B. Keramik für diese eingesetzt werden, da bei der Aufweitung des Innenrohrs - sei es bei der Befestigung der Konstruktionselemente durch Aufweiten des Rohrs unter diesen oder durch thermische Veränderungen des Rohrdurchmessers bei Erwärmung während des Laufs der Nockenwelle bzw. Abkühlung danach - Biegekräfte auf die Konstruktionselemente ausgeübt werden, die bei spröden Materialien zu Brüchen und Rissen führen, die zur Lockerung des Konstruktionselementes auf dem Rohr und damit zur Beschädigung der Nockenwelle führen können.

Es ist demzufolge Aufgabe der Erfindung, die bekannte Nockenwelle dahingehend weiterzuentwickeln, daß auch spröde Konstruktionselementmaterialien eingesetzt werden können.

Die Aufgabe wird erfindungsgemäß bei einer gattungsgemäßen gebautern Hohlwelle mit Stützkörpern zwischen Rohr und Konstruktionselementen dadurch gelöst, daß zwischen Rohr und Konstruktionselement ein Zwischenglied so angeordnet ist, daß es den Raum zwischen Rohr und Konstruktionselement zumindest teilweise so ausfüllt, daß eine Relativbewegung Rohr/Konstruktionselement bevorzugt in Richtung des Stützkörpers ermöglicht ist und das Rohr unter dem Konstruktionselement teilweise am Zwischenglied und teilweise am Stützkörper anliegt.

Der Stützkörper kann ein einstückig mit dem/n Konstruktionselement/en ausgebildetes Teil(e) des-(der)selben sein.

Die Wandstärke des Rohrs unter dem/den Konstruktions element/en kann zumindest partiell vergrößert sein.

Das/die Konstruktionselement/e kann/können bei einer bevorzugten Ausführungsform auf das Rohr und den/die Stützkörper aufgeschrumpft oder durch mechanische Verbindung, Federkraft oder Kerbwirkung mit diesem verbunden sein.

Die Verbindung von Rohr und Konstruktionselement/en und/oder Stützkörper(n) kann aber auch durch Einbringung von unterkühlten Innenteilen und anschließende Aufweitung der Innenteile hergestellt sein.

Ein bevorzugtes Verfahren zur Herstellung einer erfindungsgemäßen Hohlwelle weist folgende Schritte auf:
Einlegen der Hohlwellenkomponenten Ausgangsrohr, Konstruktionselement/e und Zwischenglied/ern sowie Stützkörper/n in eine Form unter Einbringung von Ausgangsrohr, mindestens einem Stützkörper und sowie dem/den Zwischenglied/ern in die jeweilige Öffnung des/der Konstruktionselemente/s; und Anlegen von zur Verformung des Rohrs ausreichendem Innendruck an das Rohr. Dabei kann sich das Rohr nur im Bereich des "Fensters" des/der Zwischenglied/er stärker ausdehnen, wodurch nur innerhalb dieses Rohrteilbereiches eine Kontaktierung mit und Druckausübung auf den Stützkörper erfolgt. Eine seitliche Kraftübertragung durch das Rohr auf das Konstruktionselement, die zu Biegespannungen im Konstruktionselement führen kann, wird dadurch vermieden.

Bei einer bevorzugten Variante dieses Verfahrens wird Material in Richtung der Rohrachse während der Aufbringung des zur Verformung des Rohrmaterials ausreichenden Drucks im Inneren des Rohrs und Aufbringung von Kräften in Richtung der Rohrachse nachgeführt, um eine Schwächung des Rohrdurchmessers im Bereich der Aufweitung zu vermeiden.

Das Rohr kann aus einem metallischen oder nichtmetallischen Werkstoff, einem Laminatwerkstoff oder einem faserverstärkten Werkstoff aus verschiedenen Materialien sein.
Die Verwendung von Laminatwerkstoffen ermöglicht unter anderem den Einsatz teurer , bspw. besonders korrosionsfester Materialien als Außenschichten, ohne daß das ganze Rohr aus diesem aufwendigen Material sein muß.

Außerdem besitzen sie den Vorteil, schlecht Schwingungen zu leiten, sodaß ihre Verwendung zu einer zusätzlichen Geräuschdämpfung der Nockenwelle führt.

Als Stützkörper lassen sich bevorzugt Profilstücke, Rohrabschnitte oder eine Spannhülse einsetzen.

Das Rohr kann neben den aufgesetzten Konstruktionselementen ein oder mehrere Nebenformelemente(e) aufweisen, wie bspw. einen Sechskant,die bei einem bevorzugten Herstellungsverfahren gleichzeitig mit der Befestigung der Konstruktionselemente aus dem Ausgangsrohr geformt sind.

Das/die Konstruktionselement/e ist sind bevorzugt im wesentlichen aus Metall, Hartguß, Schalenhartguß, Sinterstahl, Stahl (z.B. Feinstanzteil oder Profilstahl), Aluminium, Titan, einem gesinterten Werkstoff, Bornitrid oder Wolframcarbid, Keramik, Kunststoff, auch faserverstärktem Kunststoff, oder aus Verbundwerkstoff.

Die Öffnung/en der/des Konstruktionselemente/s zu deren/dessen Aufsetzen auf das Rohr, die für die erfindungsgemäße Befestigung über Stützkörper in Frage kommen, ist/sind bevorzugt oval, polygonförmig oder sonst unrund.

Für bestimmte Werkstoffe ist es aus Gründen niedriger Herstellungskosten bevorzugt, daß das /die Konstruktionselement/e im wesentlichen gleiche Wandstärke aufweist/en.

Die Stützkörper können aus einem Material mit einem höheren Wärmeausdehnungskoeffizienten als dem des/der Konstruktionselemente/s sein; sie können aber auch aus einem Material mit einem niedrigeren Wärmeausdehnungskoeffizienten als das Rohr sein.

Bevorzugt ist das Konstruktionselement der Stützkörper aus einem leichten, hohe Druckbeanspruchungen aufnehmenden Material, wie keramischem Material, einem faserverstärkten Material, Beton od. dgl., das außer hervorragenden mechanischen Eigenschaften, wie hohe Härte und geringe Wärmebeeinflußbarkeit auch sehr leicht ist.

Als Zwischenglied kann ein ringförmiges Element, das im Bereich des Konstruktionselementes auf das Ausgangsrohr unter dem Konstruktionselement aufgebracht ist, mit mindestens einem Fenster im Bereich des Stützkörpers zur Ausdehnung des Rohrmaterials durch dasselbe, eingesetzt werden.

Es können auch mehrere Zwischenglieder, die den Raum zwischen Innenrohr und Stützkörper derart ausfüllen, daß eine stärkere Ausdehnung des Rohrs nur in Richtung des Stützkörpers möglich ist, vorgesehen sein.

Das Vorsehen von Zwischengliedern nach der Erfindung bewirkt, daß das Konstruktionselement lediglich Zugbeanspruchungen, nicht jedoch Biegebeanspruchungen beim Aufweiten des Innenrohres oder auch im Betrieb während der Kraftübertragung durch die Konstruktionselemente ausgesetzt wird; dies ist insbesondere bei sehr spröden Materialien, wie z.B. Keramik der Fall, die bei Biegebeanspruchung leicht brechen und dadurch eine Lösung des durch sie befestigten Konstruktionselementes auftritt.

Als Material für das/die Zwischenglied/er eignet sich bevorzugt Stahl.

Weitere Merkmale und Vorteile der Erfindung ergeben sich aus den Ansprüchen sowie aus der nachfolgenden Beschreibung, in der eine bevorzugte Ausführungsform der Erfindung anhand der Zeichnung erläutert ist. Dabei zeigt:

Fig.1 :eine schematische Darstellung eines Teilabschnitts einer erfindungsgemäßen Nockenwelle im Längsschnitt, und

Fig. 2: einen Querschnitt durch einen Nocken der Welle der Fig.1 entlang der Linie A-A;

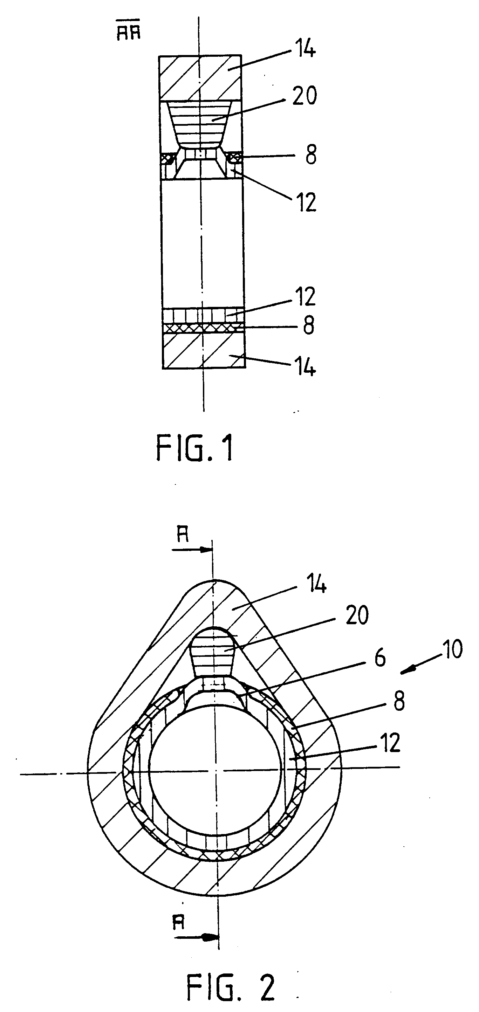

Wie in Fig. 1 gezeigt, kann eine erfindungsgemäße Hohlwelle 10, von der hier nur der einen Nocken tragende Teilbereich im Längsschnitt dargestellt ist, Konstruktionselemente 14 mit nicht kreisrunden Öffnungen aufweisen. Selbstverständlich kann die gleiche Nockenwelle auch zusätzlich Konstruktionselemente mit kreisrunden Öffnungen, wie Zahnräder, Ringe od.dgl. tragen, wobei erfindungsgemäß Stützkörper 20 für nicht kreisrunde Öffnungen beschrieben werden.

Hier ist beim Aufweiten des Rohrs 12 - sei es durch Anle gen eines Innendrucks oder durch Erwärmung eines unterkühlten Bauteils, wie aus Fig.2, die die Ausführungsform der Fig. 1 entlang der Linie A-A geschnitten zeigt, ersichtlich, unter einem Nocken 14 nur im Bereich des Fensters 6 des hier ringförmigen Zwischengliedes 8 ein Austreten von Rohrmaterial in Richtung Stützkörper 20 insoweit möglich, daß zwar ein Anliegen des Rohrmaterials am Stützkörper 20 im Fensterbereich, aber kein seitlich unregelmäßiges Belasten des Konstruktionselementes 14 aus Keramik erfolgen kann. Dadurch kann sowohl im Gebrauch als auch während der Herstellung eine Biegebeanspruchung des spröden Keramikmaterials vermieden werden. Außerdem tritt durch die gezielte Lenkung und Konzentration des Rohr-Materialflusses eine Konzentration der Druckkräfte vom Rohr auf den Stützkörper und damit eine verbesserte Befestigung des Konstruktionselementes auf.

## Patentansprüche

1. Hohlwelle aus einem Rohr (12) und aus Drehmoment übertragenden Konstruktionselementen (14), wie Zahnrädern, Kurven, Nocken od. dgl., mit einer Öffnung zum Aufsetzen auf das Rohr (12) und Stützkörpern (20), wobei die Verbindung zwischen Rohr (12), Konstruktionselement (14) und Stützkörper (20) durch Verkleinerung des Raums zwischen Rohr (12) und Konstruktions element hergestellt ist, wobei Konstruktionselement (20) und Rohr (12) kraft- und/oder formschlüssig miteinander verbunden sind und in der Öffnung des Konstruktionselementes ferner mindestens ein Stützkörper (20) angeordnet ist und das Rohr (12) teilweise am Stützkörper (20) anliegt, dadurch gekennzeichnet, daß zwischen Rohr (12) und Konstruktionselement (14) ein Zwischenglied (8) so angeordnet ist, daß es den Raum zwischen Rohr (12) und Konstruktionselement (14) zumindest teilweise so ausfüllt, daß eine Relativbewegung Rohr (12)/Konstruktionselement (14) bevorzugt in Richtung des Stützkörpers (20) ermöglicht ist und das Rohr (12) unter dem Konstruktionselement (14) teilweise am Zwischenglied (8) und teilweise am Stützkörper (20) anliegt.

2. Hohlwelle nach Anspruch 1, dadurch gekennzeichnet, daß der/die Stützkörper (20) einstückig mit dem Konstruktionselement (14) ausgebildet sind.

3. Hohlwelle nach Anspruch 1 oder 2, dadurch gekennzeichnet, daß die Konstruktionselemente (14) aufgeschrumpft sind.

4. Hohlwelle nach Anspruch 1, dadurch gekennzeichnet, daß Rohr (12), Stützkörper (20) und Zwischenglied (8) unterkühlt in die Öffnung des Konstruktionselements (14) eingebracht sind und sich bei Erwärmung verbinden.

5. Hohlwelle nach Anspruch 1, dadurch gekennzeichnet, daß die Verbindung zwischen Rohr (12), Stützkörper (20) und Konstruktionselement (14) durch mechanische Verbindung, Federkraft oder Kerbwirkung mit diesem erfolgt ist.

6. Verfahren zur Herstellung einer Hohlwelle nach einem der vorangehenden Ansprüche 1 bis 3, gekennzeichnet durch folgende Schritte:
Einlegen der Hohlwellenkomponenten Rohr (12), Konstruktionselement/e (14) und Zwischenglied(er) (8) sowie Stützkörper (20) in eine Form unter Einbringung von Ausgangsrohr, mindestens einem Stützkörper (20) und dem Zwischenglied (8) in die jeweilige Öffnung des/der Konstruktionselement/e (14); und Anlegen von zur Verformung des Rohrs (12) ausreichendem Innendruck an das Rohr (12), wobei ggf. eine Materialnachführung in Richtung der Rohrachse während der Aufbringung des zur Verformung des Rohrmaterials ausreichenden Drucks im Inneren des Rohrs (12) und Aufbringung von Kräften in Richtung der Rohrachse erfolgt.

7. Hohlwelle nach einem der Ansprüche 1 bis 5, dadurch gekennzeichnet, daß das Rohr (12) aus einem metallischen oder nichtmetallischen Werkstoff, einem Laminatwerkstoff oder einem faserverstärkten Werkstoff aus verschiedenen Materialien ist.

8. Hohlwelle nach einem der Ansprüche 1 bis 5 und 7, dadurch gekennzeichnet, daß der/die Stützkörper (20) ein Profilstück, ein Rohrabschnitt/e oder eine Spannhülse, ist/sind.

9. Hohlwellen nach einem der Ansprüche 1 bis 5 und 7 bis 8, dadurch gekennzeichnet, daß das Rohr (12) mindestens ein Nebenformelement aufweist, das aus dem Ausgangsrohr geformt ist.

10. Hohlwelle nach einem der Ansprüche 1 bis 5 und 7 bis 9, dadurch gekennzeichnet, daß das/die Konstruktionselement/e (14) im wesentlichen aus Metall, Hartguß, Schalenhartguß, Sinterstahl, Stahl (Feinstanzteil oder Profilstahl), Aluminium, Titan, einem gesinterten Werkstoff, Bornitrid oder Wolframcarbid, Keramik, Beton, Kunststoff, auch faserverstärktem Kunststoff oder aus Verbundwerkstoff sind.

11. Hohlwelle nach einem der Ansprüche 1 bis 5 und 7 bis 10, dadurch gekennzeichnet, daß die Stützkörper (20) aus einem Material mit einem höheren oder niedrigeren Wärmeausdehnungkoeffizinten als dem des/der Konstuktionselemente/s (14) sind.

12. Hohlwelle nach einem der Ansprüche 1 bis 5 und 7 bis 11, dadurch gekennzeichnet, daß das Zwischenglied (8), das den Raum zwischen Rohr (12), Konstruktionselement (14) und Stützkörper teilweise ausfüllt, ein ringörmiges Element ist, das im Bereich des Konstruktionselements (14) auf das Ausgangsrohr (12) unter dem Konstruktionselement (14) aufgebracht ist, mit mindestens einem Fenster (6) im Bereich des Stützkörpers (20) zur Ausdehnung des Rohrmaterials durch dasselbe.

13. Hohlwelle nach einem der Ansprüche 1 bis 5 und 7 bis 12, dadurch gekennzeichnet, daß der Stützkörper (20) aus einem keramischen Material oder einem faserverstärkten Material ist.

**Claims**

1. Tubular shaft formed from, a tube (12) and from torque-transmitting structural elements (14), such as toothed wheels, curves, cams or the like, having an aperture for mounting on the tube (12) and supporting means (20), the connection between tube (12), structural element (14) and supporting means (20) being established by reducing the space between tube (12) and structural element, structural element (20) and tube (12) being interconnected in a force- and/or form-locking manner and, furthermore, at least one supporting means (20) being disposed in the aperture of the structural element, and the tube (12) partially abutting against the supporting means (20), characterised in that an intermediate member (8) is so disposed between tube (12) and structural element (14) that it at least partially fills the space between tube (12) and structural element (14) so that a relative movement between tube (12) and structural element (14) is preferably rendered possible in the direction of the supporting means (20), and the tube (12), beneath the structural element (14), abuts partially against the intermediate member (8) and partially against the supporting means (20).

2. Tubular shaft according to claim 1, characterised in that the supporting means (20) is/are integrally formed with the structural element (14).

3. Tubular shaft according to claim 1 or 2, characterised in that the structural elements (14) are shrunk-on.

4. Tubular shaft according to claim 1, characterised in that tube (12), supporting means (20) and intermediate member (8) are introduced, in an under-cooled state, into the aperture of the structural element (14) and are joined together by heating.

5. Tubular shaft according to claim 1, characterised in that the connection between tube (12), supporting means (20) and structural element (14) is effected by means of a mechanical connection, spring force or notching with the latter.

6. Method of producing a hollow shaft according to one of the preceding claims 1 to 3, characterised by the following steps:
placing the hollow shaft components - tube (12), structural element/elements (14) and Intermediate member(s) (8) as well as supporting means (20) - into a mould, thereby inserting discharge tube, at least one supporting means (20) and the intermediate member (8) into the respective aperture of the structural element/elements (14); and applying internal pressure to the tube (12), such pressure being sufficient to deform the tube (12), material possibly being subsequently conducted in the direction of the tube axis during application of the pressure in the interior of the tube (12), such pressure being sufficient to deform the tube material, and applying forces in the direction of the tube axis.

7. Tubular shaft according to one of claims 1 to 5, characterised in that the tube (12) is formed from a metallic or non-metallic material, a laminate material or a fibre-reinforced material formed from various materials.

8. Tubular shaft according to one of claims 1 to 5 and 7, characterised in that the supporting means (20) is/are a shaped member, a tube section/tube sections or a clamping sleeve.

9. Tubular shafts according to one of claims 1 to 5 and 7 to 8, characterised in that the tube (12) has at least one secondary moulded element, which is moulded from the discharge tube.

10. Tubular shaft according to one of claims 1 to 5 and 7 to 9, characterised in that the structural element/elements (14) are substantially formed from metal, chilled cast-iron, shell chilled cast iron, sintered steel, steel (precision stamped part or sectional steel), aluminium, titanium, a sintered material, boron nitride or tungsten carbide, ceramics, concrete, plastics material, even fibre-reinforced plastics material or from composite material.

11. Tubular shaft according to one of claims 1 to 5 and 7 to 10, characterised in that the supporting means (20) are formed from d material having a higher or lower coefficient of thermal expansion than that of the structural element/elements (14).

12. Tubular shaft according to one of claims 1 to 5 and 7 to 11, characterised in that the intermediate member (8), which partially fills the space between tube (12), structural element (14) and supporting means, is an annular element which is mounted upon the discharge tube (12) beneath the structural element (14) in the region of the structural element (14), with at least one window (6) in the region of the supporting means (20) for the expansion of the tube material through such.

13. Tubular shaft according to one of claims 1 to 5 and 7 to 12, characterised in that the supporting means (20) is formed from a ceramic material or from a fibre-reinforced material.

**Revendications**

1. Arbre creux constitué d'un tube (12) et d'éléments de construction (14) transmettant un couple de rotation, notamment des roues dentées, des pièces courbes, des cames ou analogues, avec une ouverture pour s'accrocher sur le tube (12) et des corps d'appui (20), la liaison entre le tube (12), l'élément de construction (14) et le corps d'appui (20) étant réalisée par réduction de l'espace compris entre le tube (12) et l'élément de construction (14), l'élément de construction (20) et le tube (12) étant reliés l'un à l'autre par un système à force et/ou par adaptation de formes, au moins un corps d'appui (20) étant par ailleurs agencé dans l'ouverture de l'élément de construction et le tube (12) s'appuyant partiellement sur le corps d'appui (20), l'arbre creux étant caractérisé en ce que, entre le tube (12) et l'élément de construction (14) est agencée une pièce intermédiaire (8) telle qu'elle remplisse l'espace entre le tube (12) et l'élément de construction (14) au moins partiellement afin qu'un mouvement relatif tube (12)/élément de construction (14) soit autorisé de préférence dans la direction du corps d'appui (20) et que le tube (12) s'appuie sous l'élément de construction (14) partiellement sur la pièce intermédiaire (8) et partiellement sur le corps d'appui (20).

2. Arbre creux selon la revendication 1, caractérisé en ce que le ou les corps d'appui (20) sont constitués d'une pièce avec l'élément de construction (14).

3. Arbre creux selon la revendication 1 ou 2, caractérisé en ce que les éléments de construction (14) sont emmanchés à chaud.

4. Arbre creux selon la revendication 1, caractérisé en ce que le tube (12), le corps d'appui (20) et la pièce intermédiaire (8) sont introduits par sous-refroidissement dans l'ouverture de l'élément de construction (14) et se raccordent par réchauffement.

5. Arbre creux selon la revendication 1, caractérisé en ce que la liaison entre le tube (12), le corps d'appui (20) et l'élément de construction (14) se fait par liaison mécanique, sous l'action d'un ressort ou par effet d'entaille avec ce dernier.

6. Procédé de fabrication d'un arbre creux selon l'une quelconque des revendications 1 à 3, caractérisé par les étapes suivantes :

Installation des composants de l'arbre creux, c'est-à-dire du tube (12), du ou des élément(s) de construction (14) et de la ou des pièce(s) intermédiaire(s) (8) ainsi que des corps d'appui (20) dans une forme avec mise en place d'un tube de sortie, d'au moins un corps d'appui (20) et de la pièce intermédiaire (8) dans l'ouverture respective du ou des éléments de construction (14), et application d'une pression interne sur le tube (12) suffisante pour déformer le tube (12), un refoulement de la matière dans la direction de l'axe du tube au cours de l'application de la pression suffisante pour déformer la matière du tube (12) à l'intérieur de celui-ci et l'application de forces dans la direction de l'axe du tube se faisant éventuellement.

7. Arbre creux selon l'une quelconque des revendications 1 à 5, caractérisé en ce que le tube (12) est constitué d'une pièce métallique ou non métallique, d'une pièce feuilletée ou d'une pièce renforcée par des fibres dans diverses matières.

8. Arbre creux selon l'une quelconque des revendications 1 à 5 et 7, caractérisé en ce que le ou les corps d'appui (20) est ou sont constitué(s) d'un profilé, d'une ou de section(s) de tube ou d'un manchon.

9. Arbre creux selon l'une quelconque des revendications 1 à 5 et 7 à 8, caractérisé en ce que le tube (12) présente au moins un élément moulé latéral qui est constitué du tube de sortie.

10. Arbre creux selon l'une quelconque des revendications 1 à 5 et 7 à 9, caractérisé en ce que le ou les élément(s) de construction (14) sont constitués en substance de métal, de fonte coquillée, de fonte coquillée trempée en surface, d'acier fritté, d'acier (pièce découpée de précision ou acier profilé), d'aluminium, de titane, d'une pièce frittée, de nitrure de bore ou de carbure de tungstène, de céramique, de béton, de matière plastique, également de matière plastique renforcée par des fibres ou d'une matière composite.

11. Arbre creux selon l'une quelconque des revendications 1 à 5 et 7 à 10, caractérisé en ce que les corps d'appui (20) sont constitués d'une matière présentant des coefficients de dilatation thermique plus élevés ou plus bas que le ou les élément(s) de construction (14).

12. Arbre creux selon l'une quelconque des revendications 1 à 5 et 7 à 11, caractérisé en ce que la pièce intermédiaire (8) qui remplit partiellement l'espace compris entre le tube (12), l'élément de construction (14) et le corps d'appui, est un élément annulaire qui est agencé dans la région de l'élément de construction (14) sur le tube de sortie (12) sous l'élément de construction (14), avec au moins une fenêtre (6) dans la région du corps d'appui (20) en vue de permettre la dilatation de la matière du tube par celui-ci.

13. Arbre creux selon l'une quelconque des revendications 1 à 5 et 7 à 12, caractérisé en ce que le corps d'appui (20) est constitué d'une matière céramique ou d'une matière renforcée par des fibres.

EP 0 303 845 B1

FIG. 1

FIG. 2

8